# EUROPEAN PATENT APPLICATION

(11) **EP 1 626 365 A1**
(43) Date of publication of application: **15.02.2006**
(21) Application number: 04292027.2
(22) Date of filing: 10.08.2004
(51) Int. Cl.: G06K 19/077, G06K 19/04

(54) **A multi-standards compliant card body**

(71) Applicant: Axalto SA, 92120 Montrouge (FR)
(72) Inventor: Geva, Guillermo, Axalto SA, 92120 Montrouge (FR); Roussel, François, Axalto SA, 92120 Montrouge (FR); Le Loc'h, Alain Axalto SA, 92120 Montrouge (FR); Torlet, Sylvain, Axalto SA, 92120 Montrouge (FR); Provost, Stéphane, Axalto SA, 92120 Montrouge (FR)

(57) **Abstract**

A card body comprises a module-receiving part 3 having a cavity for receiving an electronic module ML. The card body comprises a first side part 4 coupled to the module-receiving part 3, the first side part being separated from the module-receiving part by a first separation line 6, and a second side part 5 coupled to the module-receiving part 3, the second side part being separated from the module-receiving part by a second separation line 7. The module-receiving part defines a third shape corresponding to a third card body 3 type when the first 4 and second 5 side parts are detached from the module-receiving part 3. The module-receiving part defines a second shape 2 corresponding to a second card body type when the first 4 and second 5 side parts are coupled to the module-receiving part 3.

## Description

### FIELD OF THE INVENTION

The invention relates to a card body comprising multiple formats of cards, in particular each card corresponding to a different standard, and the corresponding manufacturing method.

### BACKGROUND OF THE INVENTION

Smart cards are electronic portable devices comprising an electronic module embedded in a plastic card body. The electronic module comprises an integrated circuit and contact area for connection to an electronic device (e.g. a terminal like a mobile telephone).

Smart cards known as Subscriber Identification Modules or SIM cards are inserted in mobile telephones in order for the mobile telephone users to gain access to the different services offered on the mobile telecommunication networks by the mobile telecommunication operators.

Typically, a SIM card has a standardized format of 25 x 15 mm defined in ETSI standard GSM 11.11 "Specification of the Subscriber Identity Module - Mobile Equipment (SIM - ME) interface". Such a SIM card is also known as "plug-in" card because the mobile telephone user plugs the SIM card in a specific cavity of the mobile phone.

Usually, plug-in cards are manufactured on manufacturing equipment handling smart cards having a standardized format of 85.6 x 54 mm defined in ISO standard 7810. Such an ISO standard compliant card is also known as an "ID-1" card. The manufacturing process comprises a first step during which an ID-1 card is manufactured and a second step during which appropriate cavities and partial pre-cut shapes are made on the ID-1 card so as to define the plug-in card. Thus, cards are manufactured in such a way that they respect both ID-1 card format (as far as the plug-in card is not removed) and plug-in card format (as soon as the plug-in card is removed from ID-1 card).

The cards manufacturer delivers cards having the ID-1 card format. The cavities and partial pre-cut shapes allow a mobile telephone user to handily remove the plug-in card from the ID-1 card in order to insert it in the mobile telephone.

Now, a third type of card having a standardized format of 15 x 12 mm is defined by ETSI standard TS102221 "Smart cards; UICC interface; Physical and logical characteristics". Such an ETSI standard compliant card is also known as a "mini" card. The mini cards are also manufactured according to a similar manufacturing process on the same manufacturing equipment as the ID-1 card and the plug-in card as described hereinbefore.

Consequently, for mobile telecommunication application, smart cards can have 3 different form factors or shapes: "ID-1", "plug-in" and "mini". The mini card format is included inside the plug-in card format. The plug-in card format is included inside the ID-1 card format.

A mobile telephone user, needing a card of the plug-in card type, should detach or separate the plug-in card from the ID-1 card. A mobile telephone user, needing a card of the mini card type, should detach or separate the plug-in card from the ID-1 card, and subsequently should detach or separate the mini card from the plug-in card, or he should also directly detach or separate the mini card from the ID-1 card.

Usually the cavities are performed on the card body thanks to appropriate mechanical punching process. The card manufacturing process with 3 different form factors on a same card body is difficult to implement due to the proximity of the limit of the plug-in card and the limit of the mini card. In particular, the manufacturing equipments namely the punching tools adapted for punching two thin parallel shapes that are closed to each other in plastic material are difficult to design and to manufacture. This situation leads to an increase of the manufacturing costs.

### SUMMARY OF THE INVENTION

One goal of the invention is to propose a card body and a corresponding manufacturing method that overcome at least one of the above mentioned shortcomings of the prior art.

According to the invention, the plug-in card comprises three parts: the mini card constituting a central part separated from two side parts by breakable lines. Thus, contrary to the prior art card, the apertures around the plug-in card and around the mini card are merged.

As a consequence of the plug-in card design of the invention, it is possible to combine the three standardized formats, the mini format inside the plug-in format and the plug-in format inside the ID-1 format. It is also possible to avoid using complex punching tools (for plastic material) able to punch two thin parallel shapes very close to each other. In particular, the plug-in card design of the invention can be manufactured with punching tools and pre-cut blades analog to the one used today (manufacturing of two standardized formats). Thus, the design and the realization of the manufacturing tools according to the invention are simplified.

The manufacturing process according to the invention is a two steps process, one step for performing the apertures and one step for performing the notches (this order can be inverted). Thus, the manufacturing process is simple to implement, efficient and reliable.

The design also respects the requirements of ETSI standard about the validity of reference measurement points (known as P1, P2 and P3) as described in the standard.

In addition with the design of the invention, the separation of the plug-in card from the ID-1 card is easier than the separation of the mini card from the plug-in card. This enables to prevent the mobile telephone user from incorrect unplugging of the different cards.

### BRIEF DESCRIPTION OF THE DRAWINGS

The present invention is illustrated by way of example and not limited to the accompanying figures, in which like references indicate similar elements:

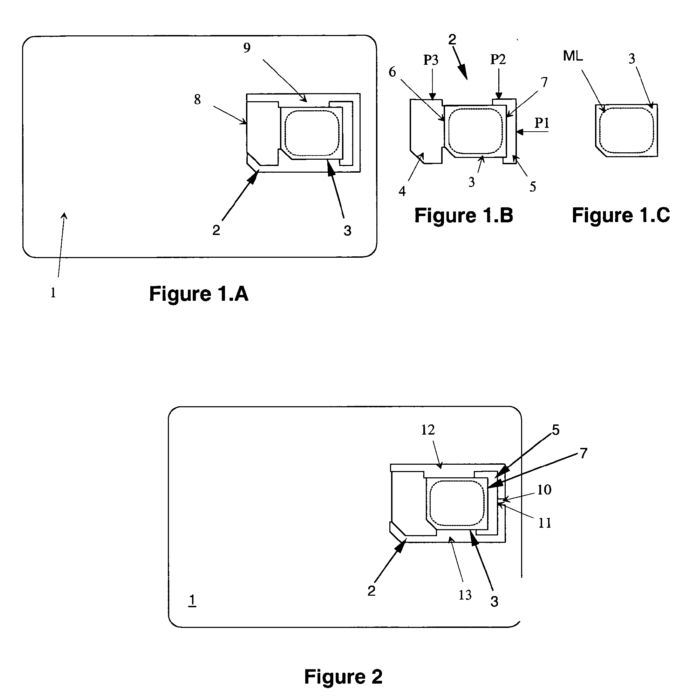

Figure 1.A schematically shows a backside view of a card body according to a first embodiment of the invention;
Figure 1.B schematically shows a backside view of a plug-in card body according to the first embodiment of the invention;
Figure 1.C schematically shows a backside view of a mini card body according to the first embodiment of the invention;
Figures 2, 3 and 4 schematically show a backside view of a card body according to different alternatives of the first embodiment of the invention;
Figure 5 schematically shows a backside view of a card body according to a second embodiment of the invention.

### DETAILED DESCRIPTION OF THE INVENTION

In the following detailed description and for the purpose of the present invention, the terminology smart card, card and card body are considered to be equivalent terminology.

Figures 1.A, 2, 3, 4 and 5 show a back-side view of a card body according to the invention. The card body comprises an ID-1 card 1, a plug-in card 2 and a mini card 3 of substantially parallelepipedic shapes.

The mini card 3 comprises a cavity for receiving an electronic module. The electronic module limit ML is shown by dotted line. It comprises, on the other side of the card, at least one integrated circuit and a contact area for connecting to a terminal. The electronic module is well known by the man skilled in the art and will not be further described.

Figures 1.A, 1.B and 1.C show a first embodiment of the invention. The plug-in card 2 comprises three separable parts: the mini card 3 and two other parts, namely a first side part 4 and a second side part 5. The mini card 3 when coupled to the first side part 4 and the second side part 5 defines an area allowing the fulfillment of the external plug-in card dimensions according to the plug-in related standard.

In particular, the second side part 5 has a shape and dimension so as to respect the measurement reference points P1 and P2 as described in the hereinbefore mentioned ETSI standard GSM 11.11. In addition, the first side part 4 has a shape and dimension so as to respect the measurement reference point P3 as described in the hereinbefore mentioned ETSI standard.

A first separation line 6 separates the first side part 4 from the mini card 3.

A second separation line 7 separates the second side part 5 from the mini card 3.

A third separation line 8 separates the first side part 4 from the ID-1 card 1.

These separation lines are weakened boundaries. In particular, the first, second and third separation lines comprise pre-cut notches.

The plug-in card 2 corresponding to the mini card 3 respectively coupled to the first side part 4 and the second side part 5 is surrounded by a separating aperture 9. The aperture 9 defines the boundaries of three sides of the plug-in card 2 into the ID-1 card 1. The third separation line 8 defines the boundary of fourth side of the plug-in card 2 into the ID-1 card 1.

Thus, thanks to the separating aperture 9 and the pre-cut notch of the third separation line 8, a mobile telephone user can easily detach or separate:
- the plug-in card 2 from the ID-1 card 1, and
- the plug-in card 2 from the ID-1 card 1, and subsequently the mini card from the plug-in card by detaching or separating the first and second side part 4 and 5.

Advantageously, one edge at the corner of the first side part 4 of the plug-in card 2 and at the corner of the mini card 3 is cut off at 45° so as to form a means of fool proofing for its appropriate positioning when inserted in a mobile telephone.

With this particular design of the plug-in card, a card body combining the three different standardized shapes can be easily manufactured with existing manufacturing process and tools. Additionally, the plug-in card can be unplugged very conveniently by a mobile telephone user.

Figures 2, 3 and 4 schematically show a backside view of a card body according to different alternatives of the first embodiment of the invention.

According to a first alternative shown on Figure 2, the second side part 5 of the plug-in card 2 is coupled to the ID-1 card 1 by an additional tab 10. Advantageously, the additional tab 10 comprises a pre-cut notch 11.

The additional tab 10 creates two separating apertures 12 and 13 around the plug-in card 2.

Preferably, the notch 11 makes the tab 10 more fragile than the notch 7 between the mini card 3 and the second side part 5. This feature avoids an unwilling separation of the second side part from the mini card during unplugging operations.

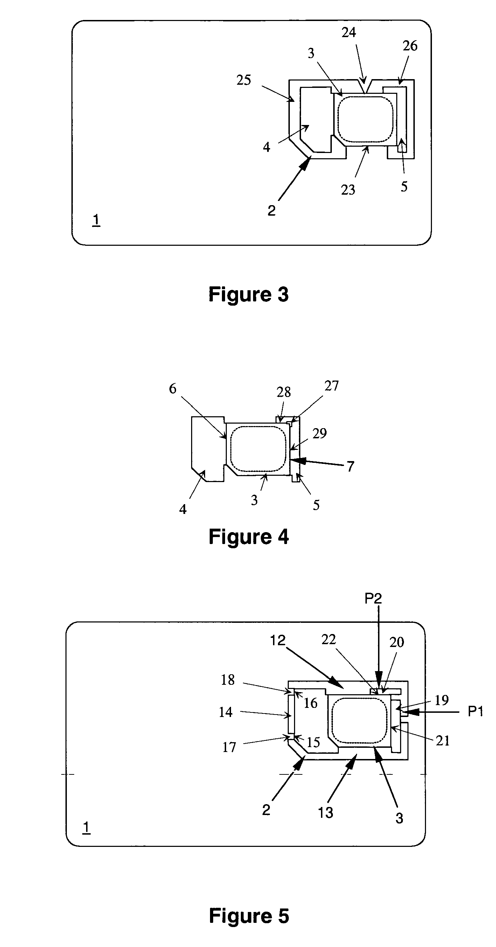

According to a second alternative shown on Figure 3, the mini card 3 is directly linked to the ID-1 card body 1 while both side part 4 and 5 are not coupled anymore to the ID-1 card body 1.

Figure 3 shows two possible way of coupling the mini card 3 to the ID-1 card 1.

The mini card 3 can be attached to the ID-1 card by a tie 24 having a substantially trapezoidal shape. The tie may be provided with a notch.

The mini card 3 can also be attached to the ID-1 card by a tab 23. The tab may be provided with a notch.

The mini card 3 can be attached by a combination of the tie 24 and the tab 23 or by one of these connection means only.

A first cavity or aperture 25 surrounds the first side part 4. A second cavity or aperture 26 surrounds the second side part 5. These apertures also partly surround the mini card 3.

This alternative is advantageous in the sense that when the mobile telephone user separates the mini-card from the ID-1 card, he preserves the entire plug-in card. It is only in a second step that he will be able to separate the first and second side parts of the plug-in card in order to obtain the mini card.

According to a manufacturing process related to this alternative, the apertures can be manufactured by molding or by a combination of punching and molding techniques.

According to a third alternative shown on Figure 4, the second separation line 7 is made of a combination of a first notch 28, an additional aperture 27 and a second notch 29. Advantageously, the additional aperture 27 is made in a corner of the mini card 3. This additional aperture creates a clear separation between the notch 28 and the notch 29. This alternative reduces the tearing of material during unplugging operation and allows getting a mini card that is cleaner in the corner once unplugged. It will be obvious for a man skilled in the art to provide the first, the second and/or the third separation lines with other combination of notches and additional apertures. These possible alternatives are not shown and will not be described in more details.

Figure 5 schematically shows a backside view of a card body according to a second embodiment of the invention.

According to this second alternative, the second separable side part 5 of the plug-in card comprises two sub-parts 19 and 20. The separation line between the mini card 3 and the two sub-parts is discontinued. The separation line comprises notches 21 and 22, respectively separating each sub-part from the mini card 3.

The first sub-part 19 has a shape and dimension so as to respect the measurement reference points P1, while the second sub-part 20 has a shape and dimension so as to respect the measurement reference points P2 as described in the hereinbefore mentioned ETSI standard GSM 11.11.

The plug-in card 2 can be coupled to the ID-1 card 1 according to one of the hereinbefore presented connection means (see Figures 1.A, 2, 3 and corresponding alternatives).

Alternatively, other connection means are also possible. In particular, the number of tabs coupling the ID-1 card to the plug-in card can be reduced and/or doubled. For example, in figure 3 a particular alternative with regards to connection means is shown. According to this alternative, an additional aperture 14 and two small tabs 17 and 18 are also coupling the first side part to the ID-1 card. These additional tabs 17, 18 may respectively comprise pre-cut notches 15 and 16.

In order to manufacture the cards described hereinbefore, the manufacturing method of the invention is using known manufacturing equipment, i.e. the one used for manufacturing prior art cards.

During a first manufacturing step a first card body 1 having a first shape and a cavity for receiving an electronic module ML is manufactured. This step will not be further described as there are numerous techniques for manufacturing such a ISO compliant card body that are well known for a man skilled in the art.

During a second manufacturing step, a second card body having a second shape and a third card body having a third shape are manufactured. The first card body encompasses the second card body, and the second card body encompasses the third card body. The third card body corresponds to a module receiving part having a cavity for receiving an electronic module.

According to the invention, during a first punching step all the apertures are performed, and during a second punching step all the notches are performed. Obviously, the first and second punching steps order can be inversed.

The first punching step consists in punching at least one aperture (one aperture 9 in Figure 1.A, two apertures 12, 13 in Figure 2, two apertures 25, 26 in Figure 3, and three apertures in Figure 5) in the first card body for substantially defining the limits of the second shape (namely the plug-in shape 2). The discontinued apertures define the different tabs or tie between the plug-in card and the ID-1 card.

The second punching step consists in punching the first and second separations.

The first separation line is punched in the second card body for defining the first side part coupled to the third card body. The second separation line is punched in the second card body for defining the second side part coupled to the third card body.

Alternatively, when only three out of four edges defining the plug-in card are punched during the first punching step, the second punching step further consists in punching the third separation line 8 (see Figure 1.A) in the first card body for completely delimiting the second shape.

Also, the electronic module can be embedded in the cavity before of after this second manufacturing step.

The notches are partial pre-cut. They are usually performed mechanically using blades. These blades can generate notches on both sides of the card body without crossing it completely or on one side only.

Alternatively, the apertures can be obtained by molding or mechanical die/matrix punch. It is possible to manufacture some of the apertures by molding and some by mechanical punching or all the apertures using the same technique.

Using the manufacturing method of the invention is advantageous because, in addition to the fact that usual manufacturing equipments can be used, the design and manufacturing of the tools used for these manufacturing equipments is easy and cost effective.

### CONCLUDING REMARKS

The detailed description hereinbefore with reference to the drawings illustrates the following characteristics. A card body comprises a module-receiving part (3) having a cavity for receiving an electronic module (ML). The card body also comprises a first side part (4) coupled to the module-receiving part (3). The first side part is separated from the module-receiving part by a first separation line (6). The card body also comprises a second side part (5) coupled to the module-receiving part (3). The second side part is separated from the module-receiving part by a second separation line (7).

The module-receiving part defines a third shape corresponding to a third card body type (namely the mini card 3 according to ETSI standard TS102213) when the first (4) and second (5) side parts are detached from the module-receiving part (3). The module-receiving part defines a second shape (2) corresponding to a second card body type (namely the plug-in card 2 according to ETSI standard GSM 11.11) when the first (4) and second (5) side parts are coupled to the module-receiving part (3).

The detailed description hereinbefore further illustrates the following optional characteristics. The card body may further comprise a first card body (an ID-1 card 1 according to ISO standard) having a first shape, the first card body (1) encompassing the second card body (2), the first card body (1) being separated from the second card body (2) by at least one aperture (one aperture 9 in the embodiment of Figure 1.A, two apertures 12, 13 in the embodiment of Figure 2, two apertures 25, 26 in the embodiment of Figure 3, and three apertures 12, 13, 14 in the embodiment of Figure 5) in the first card body for substantially defining the limits of the second card body (namely the plug-in card 2). The discontinued apertures define the different tabs (10, 17, 18) or tie (24) between the plug-in card 2 and the ID-1 card 1.

Alternatively, the first card body (ID-1 card 1) may be separated (weakened connection) from the second card body (plug-in card 2) by a third separation line (8).

Advantageously, the first (6), the second (7) and the third (8) separation line comprise at least one notch.

Alternatively, the second side part may comprise sub-parts (two sub-parts 19, 20).

The detailed description hereinbefore further illustrates the following card body manufacturing method. This method comprises a first manufacturing step consisting in manufacturing the first card body (ID-1 card 1), and a second manufacturing step consisting in manufacturing the second (plug-in card 2) and third card body (mini card 3).

The second manufacturing step comprises a first and second punching step.

During the first punching step at least one aperture (9, 12, 13, 14, 25, 26) is punched in the first card body for substantially defining a part of the second shape (e.g. three edges out of four of the plug-in card 2).

During the second punching step a first and a second separation line are punched.

The first separation line (6) is punched in the second card body (2) for defining a first side part (4) coupled to the third card body (3). The second separation line (7) is punched in the second card body (2) for defining a second side part (5) coupled to the third card body (3).

A variant of this manufacturing method may involve molding technique. According to this variant, the card body manufacturing method comprises a first manufacturing step which consists in manufacturing by a molding process the first card body (ID-1 card 1), and at least one aperture (at least one of the apertures 9, 12, 13, 14, 25, 26 in the sense that it is possible to manufacture some of the apertures by molding technique and some by mechanical punching technique or all the apertures using the molding technique) for substantially defining a part of a second shape (e.g. three edges out of four of the plug-in card 2).

During a second manufacturing step, comprising a punching step, the first and the second separation line are punched. The first separation line (6) is punched in the second card body (2) for defining a first side part (4) coupled to the third card body (3). The second separation line (7) is punched in the second card body (2) for defining a second side part (5) coupled to the third card body (3).

Optionally, the punching step may further consist in punching the apertures (9, 12, 13, 14, 25, 26) that were not manufactured during the molding process of the first manufacturing step.

Optionally, the first (6), the second (7) or the third (8) separation line may comprise at least one additional aperture (27) which is manufactured during the molding process or during the punching process.

The detailed description hereinbefore illustrates particular example in the field of mobile telecommunication (specific card sizes according to specific standards). However, the invention is not limited to this particular application and can be adapted to others applications wherein different formats of cards are involved (payment application, transport application, security application, etc....).

The remarks made herein before demonstrate that the detailed description with reference to the drawings, illustrates rather than limits the invention. There are numerous alternatives, which fall within the scope of the appended claims. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps.

## Claims

1. A card body comprising a module-receiving part (3) having a cavity for receiving an electronic module (ML),
wherein the card body further comprises:
- a first side part (4) coupled to the module-receiving part (3), the first side part being separated from the module-receiving part by a first separation line (6),
- a second side part (5) coupled to the module-receiving part (3), the second side part being separated from the module-receiving part by a second separation line (7), and
wherein the module-receiving part defines a third shape corresponding to a third card body (3) type when the first (4) and second (5) side parts are detached from the module-receiving part (3), and a second shape (2) corresponding to a second card body type when the first (4) and second (5) side parts are coupled to the module-receiving part (3).

2. A card body according to claim 1, wherein the card body further comprises a first card body (1) having a first shape, the first card body (1) encompassing the second card body (2), the first card body (1) being separated from the second card body (2) by at least one aperture (9, 12, 13, 14, 25, 26).

3. A card body according to claim 2, wherein the first card body (1) is separated from the second card body (2) by a third separation line (8).

4. A card body according to claim 2 or 3, wherein the second card body (2) is coupled to the first card body (1) through the first side part (4) or the second side parts (5).

5. A card body according to claim 2 or 3, wherein the second card body (2) is coupled to the first card body (1) through the third card body (3).

6. A card body according to any one of the previous claims, wherein the first (6), the second (7) and the third (8) separation line comprise at least one notch (28, 29).

7. A card body according to any one of the previous claims, wherein the first (6), the second (7) or the third (8) separation line comprises at least one additional aperture (27).

8. A card body according to any one of the previous claims, wherein the second side part (5) comprises at least two sub-parts (20, 21).

9. A card body according to any one of the previous claims, wherein the first, second and third shapes are substantially parallelepipedic shapes.

10. A card body according to any one of the claims 2 to 9, wherein the first card body (1) has a size of approximately 85,6 x 54 mm according to ISO standard 7810.

11. A card body according to any one of the previous claims, wherein the second card body (2) has a size of approximately 25 x 15 mm according to ETSI standard GSM 11.11.

12. A card body according to any one of the previous claims, wherein the third card body (3) has a size of approximately 15 x 12 mm according to ETSI standard TS102221.

13. A card body manufacturing method comprising the following steps:
a) a first manufacturing step consisting in manufacturing a first card body (1) having a first shape, and
b) a second manufacturing step consisting in manufacturing:
- a second card body (2) having a second shape, the first card body encompassing the second card body,
- a third card body (3) having a third shape, the second card body encompassing the third card body, the third card body (3) comprising a cavity for receiving an electronic module (ML),
wherein the second manufacturing step comprises the further following steps:
b1) a first punching step consisting in punching at least one aperture (9, 12, 13, 14, 25, 26, 27) in the first card body for substantially defining a part of the second shape,
b2) a second punching step consisting in punching
- a first separation line (6) in the second card body (2) for defining a first side part (4) coupled to the third card body (3),
- a second separation line (7) in the second card body (2) for defining a second side part (5) coupled to the third card body (3).

14. A card body manufacturing method comprising the following steps:
a) a first manufacturing step consisting in manufacturing by a molding process a first card body (1) having a first shape, and at least one aperture (9, 12, 13, 14, 25, 26) for substantially defining a part of a second shape, the second shape corresponding to a second card body (2), the first card body encompassing the second card body,
b) a second manufacturing step consisting in manufacturing a third card body (3) having a third shape, the second card body encompassing the third card body, the third card body (3) comprising a cavity for receiving an electronic module (ML), the second manufacturing step comprises a punching step consisting in punching:
- a first separation line (6) in the second card body (2) for defining a first side part (4) coupled to the third card body (3),
- a second separation line (7) in the second card body (2) for defining a second side part (5) coupled to the third card body (3).

15. A card body manufacturing method according to claim 14, wherein the first manufacturing step further consists in manufacturing at least one additional aperture (27) by the molding process.

16. A card body manufacturing method according to claim 14 or 15, wherein the punching step further consists in punching the apertures (9, 12, 13, 14, 25, 26, 27) that were not manufactured during the molding process of the first manufacturing step.

17. A card body manufacturing method according to any one of the claims 13 to 16, wherein the punching step further consists in punching a third separation line (8) in the first card body (1) for completely defining the second shape.

18. A card body manufacturing method according to claim 13 or 17, wherein the first punching step and second punching step are inversed.
